# EUROPEAN PATENT APPLICATION

(11) **EP 4 578 661 A1**
(43) Date of publication of application: **02.07.2025**
(21) Application number: 23220381.0
(22) Date of filing: 27.12.2023
(51) Int. Cl.: B60B 7/00, B60B 7/02

(54) **AERODYNAMIC WHEEL CAP WITH ENHANCEMENT FOR BETTER BRAKE COOLING**

(71) Applicant: Volvo Truck Corporation, 405 08 Göteborg (SE)
(72) Inventor: SHANKAR, Naveen, 562114 BANGALORE (IN); DAS, Alokekumar, 390023 VADODARA (IN)
(74) Representative: Lavoix

(57) **Abstract**

A wheel cap (3), comprising: an inner side, for attaching the wheel cap to a wheel rim (2) of a wheel; a peripheral edge (33), coaxial with a central axis (A) of the wheel cap; an outer face (32), opposite to the inner side, wherein the outer face is delineated by the peripheral edge and comprises a peripheral portion (34) and a central portion (35), centered on the central axis; and openings (37, 38, 39), connecting the peripheral portion to the inner side. The outer face is concave, so that: the central portion is recessed inwards relative to the peripheral portion along the central axis; and the peripheral portion is recessed inwards relative to the peripheral edge along the central axis.

## Description

### TECHNICAL FIELD

The disclosure relates generally to the enhancement of the aerodynamics of a wheel and the use of an airflow to cool a corresponding brake. In particular aspects, the disclosure relates to a wheel cap, a wheel rim and a wheel. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Wheel cap with openings are used to enhance the airflow near the wheel and enhance the aerodynamics of the vehicle. The openings limit the aerodynamic drag of the wheel by transforming the turbulent airflow generated by the rotation of the wheel to a less turbulent airflow. However, the airflow intake behind the wheel cap is often limited, so that few airflow is available to cool the brake.

### SUMMARY

According to a first aspect of the disclosure, a wheel cap, comprising: an inner side, for attaching the wheel cap to a wheel rim of a wheel; a peripheral edge, coaxial with a central axis of the wheel cap; an outer face, opposite to the inner side, wherein the outer face is delineated by the peripheral edge and comprises a peripheral portion and a central portion, centered on the central axis; and openings, connecting the peripheral portion to the inner side. The outer face is concave, so that: the central portion is recessed inwards relative to the peripheral portion along the central axis; and the peripheral portion is recessed inwards relative to the peripheral edge along the central axis.

The first aspect of the disclosure may seek to both enhance the aerodynamics of the wheel to which the wheel cap is to be attached and to cool a brake of said wheel. A technical benefit may include limiting the aerodynamics drag of wheel by transforming turbulent outer airflow to laminar airflow thanks to the openings. In addition, the concave shape of the outer face of the wheel cap may tend to drive the outer airflow into the wheel, through some of the openings, and to extract an inner airflow out of the wheel, through other openings, when the wheel is in rotation around the central axis and rolls in a forward direction. This may enable a better cooling of the brake, if said brake is positioned at the inner side of the wheel cap, inside the wheel rim.

Optionally in some examples, including in at least one preferred example, the wheel cap further comprises inner vanes, extending from the peripheral part to the inner side, wherein each inner vane delineates at least one of the openings and wherein each inner vane has a flared shape centered on the central axis, diverging from the outer face towards the inner side. A technical benefit may include transforming turbulent outer airflow into laminar airflow. The vanes indeed may guide the outer airflow through the openings and enable that the airflow becomes laminar when admitted there through. A technical benefit may include that the vanes located in a backward direction contribute to draw the outer airflow inside the openings they delineate, and that the vanes located in a frontward direction contribute to eject an inner airflow from the inner side to the outer face of the wheel cap.

Optionally in some examples, including in at least one preferred example, one of the openings comprises an outer central edge delimiting a peripheral side of the opening at the outer face of the wheel cap, said outer central edge forming a centrally protruding ridge. A technical benefit may include that the protruding ridge enables that the sides of the opening are stepped relative to each other.

Optionally in some examples, including in at least one preferred example, one of the openings is an arcuate opening, which has an arcuate shape centered on the central axis. A technical benefit may include maximizing the airflow flowing through said arcuate opening, when the wheel is turning around the central axis, without impairing the aerodynamics of the wheel cap.

Optionally in some examples, including in at least one preferred example, the arcuate opening comprises: a first orthoradial end; a second orthoradial end; a peripheral side, connecting the first orthoradial end to the second orthoradial end, wherein the peripheral side has an arcuate shape centered on the central axis ; and a central side, connecting the first orthoradial end to the second orthoradial end; wherein the central side has an arcuate shape centered on the central axis. A technical benefit may include improvement of the aerodynamics of the wheel cap.

Optionally in some examples, including in at least one preferred example, one of the openings is a first peripheral opening and one of the openings is a second peripheral opening, the first peripheral opening being positioned between the peripheral edge and the second peripheral opening, so that the first peripheral opening and the second peripheral opening are radially successive relative to the central axis, wherein the second peripheral opening is recessed inwards relative to the first peripheral opening. A technical benefit may include improvement of the aerodynamics of the wheel cap and maximizing the airflow flowing through the openings.

Optionally in some examples, including in at least one preferred example, the first peripheral opening and the second peripheral opening are separated by one of the inner vanes, said inner vane delineating a central side of the first peripheral opening and a peripheral side of the second peripheral opening. A technical benefit may include providing a single vane for two peripheral openings.

Optionally in some examples, including in at least one preferred example, the openings include central openings having a diffuser shape which opens towards the inner side of the wheel cap and diverges from the outer face to the inner side. A technical benefit may include that the central openings are also able to drive the outer airflow to the inner side of the wheel cap, despite the central openings having a more central position that the peripheral openings.

Optionally in some examples, including in at least one preferred example, the wheel cap further comprises inner blades arranged at the inner side and protruding inwardly. A technical benefit may include obtaining that the inner airflow is moved by the inner blades towards the peripheral edge by centrifugal effect.

Optionally in some examples, including in at least one preferred example, the inner side comprises a peripheral inner face, centered on the central axis, delineated peripherally by the peripheral edge and centrally by the openings and the inner blades protrude inwardly from the peripheral inner face. A technical benefit may include improving the efficiency of the inner blades in moving the inner airflow towards the peripheral edge.

Optionally in some examples, including in at least one preferred example, each inner blade is oriented radially relative to the central axis, and extends from the peripheral edge towards the central axis and each inner blade comprises an intrados oriented in a forward rotation direction of the wheel cap, and an extrados oriented opposite, wherein each inner blade is curved so that the intrados is concave and the extrados is convex. A technical benefit may include improving the efficiency of the inner blades in moving the inner airflow towards the peripheral edge.

Optionally in some examples, including in at least one preferred example, the outer face has a parabolic shape centered on the central axis. A technical benefit may include improvement of the aerodynamics of the outer face.

According to a second aspect of the disclosure, a wheel comprises: the wheel cap as defined above; and a wheel rim, comprising a central outer boss. The wheel cap is attached to the wheel rim by means of the inner side of the wheel cap being attached to the central outer boss of the wheel rim. The second aspect of the disclosure may seek to both enhance the aerodynamics of the wheel to which the wheel cap is attached and to cool a brake of said wheel. A technical benefit may include limiting the aerodynamics drag of wheel by transforming turbulent outer airflow to laminar airflow thanks to the openings. In addition, the concave shape of the outer face of the wheel cap may tend to drive the outer airflow into the wheel, through some of the openings, and to extract an inner airflow out of the wheel, through other openings, when the wheel is in rotation around the central axis and rolls in a forward direction. This may enable a better cooling of the brake, if said brake is positioned at the inner side of the wheel cap, inside the wheel rim.

Optionally in some examples, including in at least one preferred example, the wheel rim comprises an outer peripheral rim centered on the central axis. An annular gap is defined between the peripheral edge and the outer peripheral rim. A technical benefit may include maximizing the flow of inner airflow being ejected outwardly, by enabling said airflow to also be ejected through the annular gap. Preferably, if said annular gap is provided, the wheel cap also includes the aforementioned inner blades, which contribute to ejecting the inner airflow through the annular gap by centrifugal effect.

According to a third aspect of the disclosure, a truck, comprising at least one wheel as defined above. The second aspect of the disclosure may seek to both enhance the aerodynamics of the truck, at the wheel of said truck, and to cool a brake of said wheel. A technical benefit may include limiting the aerodynamics drag of wheel by transforming turbulent outer airflow to laminar airflow thanks to the openings. In addition, the concave shape of the outer face of the wheel cap may tend to drive the outer airflow into the wheel, through some of the openings, and to extract an inner airflow out of the wheel, through other openings, when the wheel is in rotation around the central axis and rolls in a forward direction. This may enable a better cooling of the brake, if said brake is positioned at the inner side of the wheel cap, inside the wheel rim.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a side view of a wheel cap belonging to a vehicle according to an embodiment of the invention.
**FIG. 2** is a radial cross-section of a wheel of the vehicle, including the wheel cap of **FIG.1** and a wheel rim.
**FIG. 3** is a perspective view of the detail III of FIG. 1, where the wheel cap is cut radially.
**FIG. 4** is a side view of the vehicle including the wheel of FIG.2.

### DETAILED DESCRIPTION

The detailed description set forth below provides information and examples of the disclosed technology with sufficient detail to enable those skilled in the art to practice the disclosure.

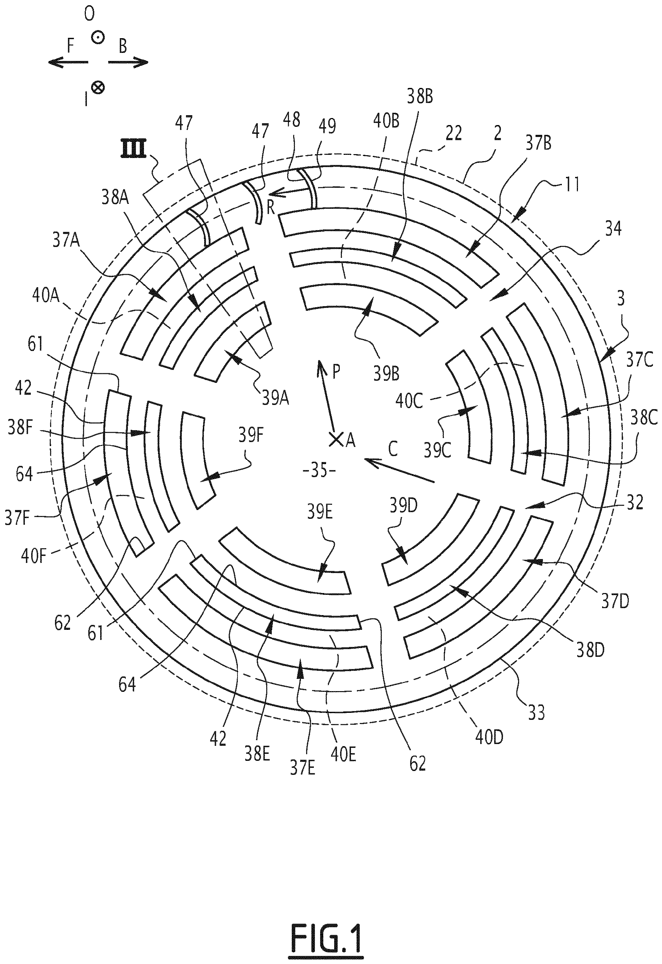

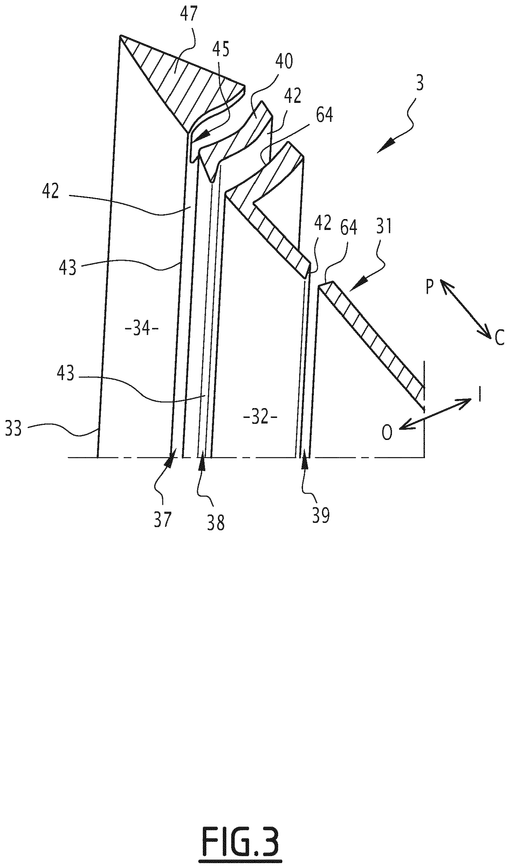

Figures 1 to 4 depict a vehicle 9, comprising several wheels, including a wheel 1 comprising a wheel rim 2 and a wheel cap 3, according to an embodiment of the invention. Preferably, the other wheels of the vehicle 9 are similar to wheel 1.

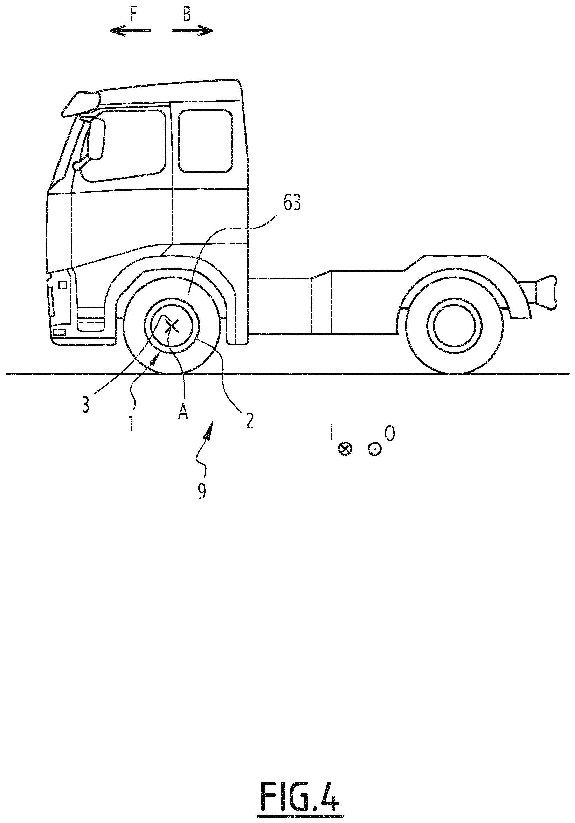

The vehicle 9 is shown only in Figure 4 and is embodied as a truck. However, the wheel 1 may belong to a vehicle of another type, such as a car, a bus, a coach, or the like.

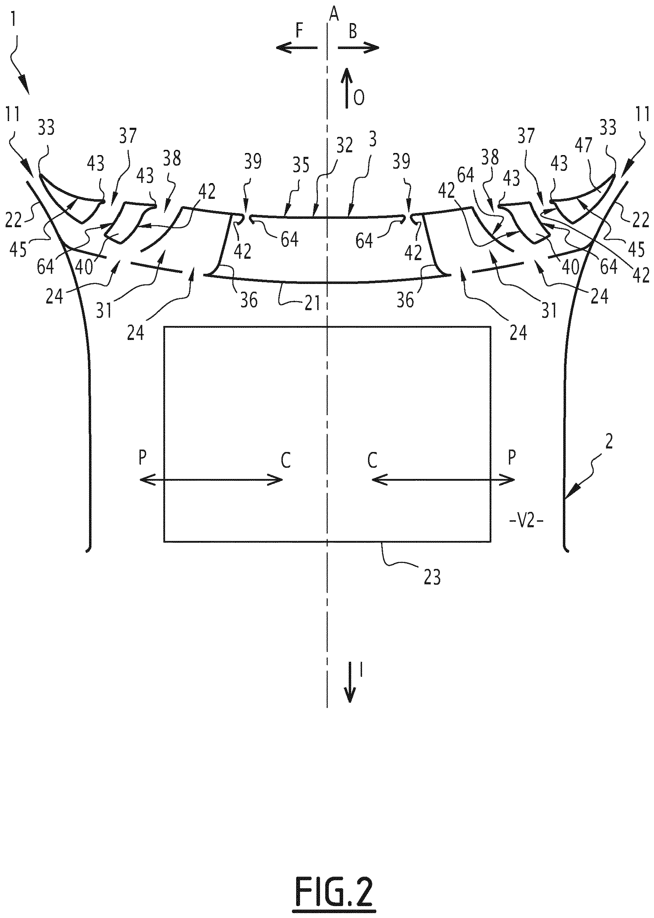

The wheel cap 3, best visible in Figures 1 to 3, comprises an inner side 31, an outer face 32 and a peripheral edge 33, and defines a central axis A. The wheel cap 3 defines an inner direction I, best visible in Figure 2, parallel to the central axis A and directed from the outer face 32 to the inner side 31.

The peripheral edge 33 preferably has a circular shape centered on the central axis A. The peripheral edge 33 links together the outer face 32 and the inner side 31.

The outer face 32 is delineated by the peripheral edge 33. The outer face 32 comprises a peripheral portion 34 and a central portion 35, centered on the central axis A.

The peripheral portion 34 extends from the peripheral edge 33 to the central portion 35 in a central direction C, said central direction C being radial relative to the central axis A and directed towards the central axis A. The peripheral portion 34 is ring-shaped around the central axis A.

The central portion 35 extends from the central axis A to the peripheral portion 34 in a peripheral direction P, opposite to the central direction C. The central axis A crossed through the central portion 35.

Terms such as "central", "centrally" refer to the central direction C, unless otherwise indicated. Terms such as "peripheral", "periphery" refer to the peripheral direction P, unless otherwise indicated. Terms such as "inner", "inwards" or "inwardly" refer to the inner direction I, unless otherwise indicated. Terms such as "outer", "outwards" or "outwardly" refer to an outer direction O oriented opposite to the inner direction I, unless otherwise indicated. Terms such as "radial" or "radially" refer to a direction parallel to the directions C and P, unless otherwise indicated. Terms such as "orthoradial" refer to a direction perpendicular not only to the direction C but also to the axis A, unless otherwise indicated.

The outer face 32 is concave so that the central portion 35 is recessed inwards, i.e. in the inner direction I, relative to the peripheral portion 34 along the central axis A. The peripheral portion 34 is recessed inwards, i.e. in the inner direction I, relative to the peripheral edge 33 along the central axis A. Preferably, the outer face 32 has a parabolic shape centered of the central axis, recessed at the axis A and protruding at the peripheral edge 33.

The wheel cap 3 comprises first openings 37, second openings 38 and third openings 39 connecting the peripheral portion 34 of the outer face 32 to the inner side 31. In use, the openings 37, 38 and 39 enable an airflow from the outer face 32 to the inner side 31.

In the illustrated example, the first openings 37 comprise six openings 37A, 37B, 37C, 37D, 37E, 37F positioned around the central axis A. Depending on the application, a different number of first openings 37 can be implemented instead of six. Preferably, the first openings 37 are distributed along a circle centered on the central axis A. Preferably, the first openings 37 are equally distributed around the central axis A. The first openings 37 are arranged radially between the peripheral edge 33 and the second openings 38.

The second openings 38 comprises six openings 38A, 38B, 38C, 38D, 38E, 38F positioned around the central axis A. Depending on the application, a different number of second openings 38 can be implemented instead of six. Preferably, as many second openings 38 than first openings 37 are provided. Preferably, the second openings 38 are distributed along a circle centered on the central axis A. Preferably, the second openings 38 are equally distributed around the central axis A. Preferably, each second opening 38 is radially aligned with one of the first openings 37. The second openings 38 are arranged radially between the first openings 37 and the central portion 35. At the outer face 32, the second openings 38 are recessed inwards relative to the first openings 37.

The third openings 39 comprises six openings 39A, 39B, 39C, 39D, 39E, 39F positioned around the central axis A. Depending on the application, a different number of third openings 39 can be implemented instead of six. Preferably, as many third openings 38 than second openings 38 are provided. Preferably, the third openings 39 are distributed along a circle centered on the central axis A. Preferably, the third openings 39 are equally distributed around the central axis A. Preferably, each third opening 39 is radially aligned with one of the second openings 38. The third openings 39 are arranged radially between the second openings 38 and the central portion 35. At the outer face 32, the third openings 39 are recessed inwards relative to the second openings 38.

More specifically, the first opening 37A is positioned between the peripheral edge 33 and the second opening 38A, the second opening 38A is positioned between the first opening 37A and the third opening 39A. Preferably, the first, the second and the third openings 37A, 38A, 39A are arranged successively radially relative to the central axis A, in the direction central C. The second opening 38A is recessed inwards relative to the first opening 37A and the third opening 39A is recessed inwards relative to the second opening 38A.

The description of the first opening 37A preferably applies to the first openings 37B, 37C, 37D, 37E, 37F, which may be identical to each other.

The description of the second opening 38A preferably applies to the second openings 38B, 38C, 38D, 38E, 38F, which may be identical to each other.

The description of the third opening 39A preferably applies to the third openings 39B, 39C, 39D, 39E, 39F, which may be identical to each other.

The inner side 31, opposed to the outer face 32 along the axis A, is delineated by the peripheral edge 33. The inner side 31 comprises means 36, such as clips, brackets or the like, for attaching the wheel cap 3 to the wheel rim 2. The inner side 31 comprises a peripheral inner face 45, centered on the central axis A, delineated peripherally by the peripheral edge 33 and centrally by the first openings 37.

Preferably, each of the first, second and third openings 37, 38, 39 has an arcuate shape centered on the central axis A.

Preferably, each arcuate opening 37, 38 and 39 comprises a first orthoradial end 61 and a second orthoradial end 62, arranged on a single circle centered on the central axis A. Each arcuate opening 37, 38 and 39 comprises a peripheral side 42, connecting the first orthoradial end 61 to the second orthoradial end 62. The peripheral side 42 has an arcuate shape centered on the central axis A. Each arcuate opening 37, 38 and 39 comprises a central side 64, connecting the first orthoradial end 61 to the second orthoradial end 62, and extending parallel to the peripheral side 42. The central side 64 has an arcuate shape centered on the central axis A. The central side 64 is arranged radially between the peripheral side 42 and the central axis A.

Preferably, the wheel cap 3 comprises inner vanes 40. Each vane 40 extends from the peripheral portion 34 of the outer face 32 to the inner side 31. For example, the vanes 40 comprises six vanes 40A, 40B, 40C, 40D, 40E, 40F. A different number of vanes 40 than six may be provided depending on the application. Preferably, the wheel cap 3 is provided with as many vanes 40 as first openings 37 and as second openings 38.

Each vane 40 delineates one of the first openings 37 and one of the second openings 38, by being positioned radially between said first opening 37 and second opening 38. More specifically, the vanes 40A, 40B, 40C, 40D, 40E, 40F respectively delineate the first openings 37A, 37B, 37C, 37D, 37E, 37F and second openings 38A, 38B, 38C, 38D, 38E, 38F. In particular, each vane 40 forms the peripheral side 42 of one of the second openings 38 and the central side 64 of one of the first openings 37.

Each inner vane 40 preferably has a flared shape, centered on the central axis A, diverging in the inner direction I, from the outer face 32 towards the inner side 31. Consequently, the central side 64 of the first opening 37 and the peripheral side 42 of the second opening 38 are both beveled.

Each of the first openings 37 and of the second openings 38 comprises an outer central edge 43, delimiting the peripheral side 42 of said openings 37 and 38 at the outer face 32. In other words, the outer central edge 43 is formed at the intersection of the outer face 32 and the peripheral side 42. The outer central edge 43 forms a centrally protruding ridge which extends in the central direction C. In other words, the protruding ridge protrudes towards the central axis A. The protruding ridge enables that, for the first and second openings 37 and 38, the peripheral side 42 extends further than the central side 64 in the outer direction O.

The vanes 40A, 40B, 40C, 40D, 40E, 40F are preferably identical.

The third openings 39 are central openings, since they are located closest to the central axis A compared to the other openings 37 and 38.. Each third opening 39 has a diffuser shape which opens towards the inner side 31 of the wheel cap 3 and diverges from the outer face 32 to the inner side 31. To that end, the peripheral side 42 and the central side 64 are each beveled from the outer face 32 to the inner side 31 so as to diverge from each other in the inner direction I.

Preferably, the wheel cap 3 comprises inner blades 47, at the inner side 31. The inner blades 47 protrude inwardly from the peripheral inner face 45. The inner blades 47 are oriented radially relative to the central axis A. The inner blades 47 extend from the peripheral edge 33 to the first openings 37, towards the central axis A.

Each inner blade 47 comprises an intrados 48 oriented in a forward rotation direction R of the wheel cap, and an extrados 49 oriented opposite. The forward rotation direction R is orthoradial relative to the central axis A. Preferably, the forward rotation direction R corresponds to the direction of rotation of the wheel 1 when the vehicle 9 is driven forward, in a forward direction F. Each blade 47 is preferably curved so that the intrados 47 is concave and the extrados 49 is convex.

The wheel rim 2 comprises a central outer boss 21, where the inner side 31 of the wheel cap 3 is attached by the attaching means 36. The central outer boss 21 is centered on the central axis A. The wheel rim 2 also comprises an outer peripheral rim 22 centered on the central axis A. The wheel rim 2 also comprises an inner peripheral rim, not shown. As shown in Figure 4, the wheel 1 may comprise a tire 63. The tire 63 is mounted on the wheel rim 2, peripherally to the wheel rim 2, and axially between the outer peripheral rim 22 and the non-shown inner peripheral rim. The outer peripheral rim 22 and the central boss 21 delineate an interior volume V2 of the wheel rim 2.

The vehicle 9 comprises a brake 23, which is positioned in the interior volume V2 of the wheel rim 2. The wheel rim 2 comprises holes 24 connecting the inner side 31 of the wheel cap 3 to the interior volume V2 of the wheel rim 2. The holes 24 approximately face the first and second openings 37 and 38.

Preferably, the outer peripheral rim 22 and the peripheral edge 33 define an annular gap 11 between the peripheral edge 33 and the outer peripheral rim 22, when the wheel cap 3 is attached to the wheel rim 2, as shown in Figure 2.

When the vehicle 9 goes forward in the forward direction F, the wheel 1 rotated in the rotation direction R around the central axis A. Relatively to the wheel 1, the ambient air around the vehicle 9 flows in a backward direction B. Due to the movement of the vehicle in the forward direction F, to the rotation of the wheel cap 3, and to the concave shape of the outer face 32, pressure is increased at the outer face 32 in the backward direction B and decreased at the outer face 32 in the frontward direction F.

Consequently, the outer airflow is driven inside the wheel 1, through the openings 37 and 38 positioned in the backward direction B relative to the central axis A. The ridges 43 of said openings 37 and 38 may increase this effect. In particular, the airflow crosses said openings 37 and 38 to reach the inner side 31 of the wheel cap 3 and then crosses the openings 24 located in the backward direction B relative to the central axis A. Therefore, this airflow reaches the brake 23 in the inner volume V2, so that the brake 23 is cooled by said airflow.

The decreased pressure at the outer face 32 in the forward direction F enables that the first and second openings 37 and 38 positioned in the frontward direction F relative to the central axis A tend to eject an inner airflow from the inner volume V2, through the holes 24 positioned in the frontward direction relative to the central axis A. In other words, the airflow that has cooled the brake 23 in the volume V2 is ejected outside of the wheel 1 successively through the holes 24 and through the openings 37 and 38 located in the frontward direction F relative to the central axis A. The ridges 43 may of the openings 37 and 38 positioned in the frontward direction F may increase this effect.

The diffuser shape of the central openings 39 promotes that the central openings 39 located all around axis A suck the outer airflow towards the inside of the wheel 1.

An inner airflow flowing from the holes 24 to the inner side 31 may also be ejected outside the wheel 1 through the gap 11. The inner blades 47 may increase the ejection of air through the gap 11 by centrifugal effect, since the blades 47 are rotating around the central axis A in the forward rotation direction R, and act as a centrifugal pump.

The first, the second and the third openings 37, 38 and 39 and the vanes 40, guiding the outer airflow through the first, the second and the third openings 37, 38 and 39, during the intake of the air behind the inner side 31 of the wheel cap 3 promote that the airflow is laminar, which increases the overall aerodynamics of the vehicle 9 at the wheel 1. The inner blades 47 and the annular gap 11 maintain the airflow laminar when the air is pushed out from behind the wheel cap 3.

Example 1: A wheel cap 3, comprising:
- an inner side 31, for attaching the wheel cap 3 to a wheel rim 2 of a wheel 1;
- a peripheral edge 33, coaxial with a central axis A of the wheel cap 3;
- an outer face 32, opposite to the inner side 33, wherein the outer face 32 is delineated by the peripheral edge 33 and comprises a peripheral portion 34 and a central portion 35, centered on the central axis A; and
- openings 37, 38, 39, connecting the peripheral portion 34 to the inner side 31;
wherein the outer face 32 is concave, so that:
- the central portion 35 is recessed inwards relative to the peripheral portion 34 along the central axis A; and
- the peripheral portion 34 is recessed inwards relative to the peripheral edge 33 along the central axis A.

Example 2: The wheel cap 3 of example 1, further comprising inner vanes 40, extending from the peripheral part to the inner side 31, wherein each inner vane 40 delineates at least one of the openings 37, 38, 39 and wherein each inner vane 40 has a flared shape centered on the central axis 40, diverging from the outer face 32 towards the inner side 31.

Example 3: The wheel cap 3 of any one of the preceding examples, wherein at least one of the openings 37, 38, 39 comprises an outer central edge 43 delimiting a peripheral side 42 of the opening 37, 38, 39 at the outer face 32 of the wheel cap 3, said outer central edge 43 forming a centrally protruding ridge.

Example 4: The wheel cap 3 of any one of the preceding examples, wherein, at least one of the openings 37, 38, 39 is an arcuate opening, which has an arcuate shape centered on the central axis A.

Example 5: The wheel cap 3 of example 4, wherein the arcuate opening 37, 38, 39 comprises:
- a first orthoradial end 61;
- a second orthoradial end 62;
- a peripheral side 42, connecting the first orthoradial end 61 to the second orthoradial end 62, wherein the peripheral side 42 has an arcuate shape centered on the central axis A; and
- a central side 64, connecting the first orthoradial end 61 to the second orthoradial end 62; wherein the central side 64 has an arcuate shape centered on the central axis A.

Example 6: The wheel cap 3 of any one of the preceding examples, wherein at least one of the openings 37, 38, 39 is a first peripheral opening 37 and at least one of the openings is a second peripheral opening 38, the first peripheral opening 37 being positioned between the peripheral edge 33 and the second peripheral opening 38, so that the first peripheral opening 37 and the second peripheral opening 38 are radially successive relative to the central axis A, wherein the second peripheral opening 38 is recessed inwards relative to the first peripheral opening 37.

Example 7: The wheel cap 3 of any one of the example 2 or 3, combined with claim 6, wherein the first peripheral opening 37 and the second peripheral opening 38 are separated by one of the inner vanes 40, said inner vane delineating a central side 64 of the first peripheral opening 37 and a peripheral side 42 of the second peripheral opening 38.

Example 8: The wheel cap 3 of any one of the preceding examples, wherein the openings 37, 38, 39 include central openings 39 having a diffuser shape which opens towards the inner side 31 of the wheel cap 3 and diverges from the outer face 32 to the inner side 31.

Example 9: The wheel cap 3 of any one of the preceding examples, wherein the wheel cap 3 further comprises inner blades 47 arranged at the inner side 31 and protruding inwardly.

Example 10: The wheel cap 3 of example 9, wherein:
- the inner side 31 comprises a peripheral inner face 45, centered on the central axis A, delineated peripherally by the peripheral edge 33 and centrally by the openings 37; and
- the inner blades 47 protrude inwardly from the peripheral inner face 45.

Example 11: The wheel cap 3 of any one of the examples 9 or 10, wherein each inner blade 47 is oriented radially relative to the central axis A, and extends from the peripheral edge 33 towards the central axis A and wherein each inner blade 47 comprises an intrados 48 oriented in a forward rotation direction R of the wheel cap A, and an extrados 49 oriented opposite, wherein each inner blade 47 is curved so that the intrados 48 is concave and the extrados 49 is convex.

Example 12: The wheel cap 3 of any one of the preceding examples, wherein the outer face 32 has a parabolic shape centered on the central axis A.

Example 13: A wheel 1, comprising:
- the wheel cap 3 according to any one of the preceding examples; and
- a wheel rim 2, comprising a central outer boss 21, wherein the wheel cap 3 is attached to the wheel rim 2 by means 36 of the inner side 31 of the wheel cap 3 being attached to the central outer boss 21 of the wheel rim 2.

Example 14: The wheel 1 of example 13, wherein the wheel rim 2 comprises an outer peripheral rim 22 centered on the central axis A, wherein an annular gap 11 is defined between the peripheral edge 33 and the outer peripheral rim 22.

Example 15: a truck 9 comprising at least one wheel 1 according to any one of the examples 13 or 14.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A wheel cap (3), comprising:
- an inner side (31), for attaching the wheel cap (3) to a wheel rim (2) of a wheel (1);
- a peripheral edge (33), coaxial with a central axis (A) of the wheel cap (3);
- an outer face (32), opposite to the inner side (31), wherein the outer face (32) is delineated by the peripheral edge (33) and comprises a peripheral portion (34) and a central portion (35), centered on the central axis (A); and
- openings (37, 38, 39), connecting the peripheral portion (34) to the inner side (31);
wherein the outer face (32) is concave, so that:
- the central portion (35) is recessed inwards relative to the peripheral portion (34) along the central axis (A); and
- the peripheral portion (34) is recessed inwards relative to the peripheral edge (33) along the central axis (A).

2. The wheel cap (3) of claim 1, further comprising inner vanes (40), extending from the peripheral part to the inner side (31), wherein each inner vane (40) delineates at least one of the openings (37, 38, 39) and wherein each inner vane (40) has a flared shape centered on the central axis (A), diverging from the outer face (32) towards the inner side (31).

3. The wheel cap (3) of any one of the preceding claims, wherein at least one of the openings (37, 38, 39) comprises an outer central edge (43) delimiting a peripheral side (42) of the opening (37, 38, 39) at the outer face (32) of the wheel cap (3), said outer central edge (43) forming a centrally protruding ridge.

4. The wheel cap (3) of any one of the preceding claims, wherein, at least one of the openings (37, 38, 39) is an arcuate opening, which has an arcuate shape centered on the central axis (A).

5. The wheel cap (3) of claim 4, wherein the arcuate opening (37, 38, 39) comprises:
- a first orthoradial end (61);
- a second orthoradial end (62);
- a peripheral side (42), connecting the first orthoradial end (61) to the second orthoradial end (62), wherein the peripheral side (42) has an arcuate shape centered on the central axis (A); and
- a central side (64), connecting the first orthoradial end (61) to the second orthoradial end (62); wherein the central side (64) has an arcuate shape centered on the central axis (A).

6. The wheel cap (3) of any of the preceding claims, wherein at least one of the openings (37, 38, 39) is a first peripheral opening (37) and at least one of the openings (37, 38, 39) is a second peripheral opening (38), the first peripheral opening (37) being positioned between the peripheral edge (33) and the second peripheral opening (38), so that the first peripheral opening (37) and the second peripheral opening (38) are radially successive relative to the central axis (A), wherein the second peripheral opening (38) is recessed inwards relative to the first peripheral opening (37).

7. The wheel cap (3) of any one of claims 2 or 3, combined with claim 6, wherein the first peripheral opening (37) and the second peripheral opening (38) are separated by one of the inner vanes (40), said inner vane (40) delineating a central side (64) of the first peripheral opening (37) and a peripheral side (42) of the second peripheral opening (38).

8. -The wheel cap (3) of any one of the preceding claims, wherein the openings (37, 38, 39) include central openings (39) having a diffuser shape which opens towards the inner side (31) of the wheel cap (3) and diverges from the outer face (32) to the inner side (31).

9. The wheel cap (3) of any one of the preceding claims, wherein the wheel cap (3) further comprises inner blades (47) arranged at the inner side (31) and protruding inwardly.

10. The wheel cap (3) of claim 9, wherein:
- the inner side (31) comprises a peripheral inner face (45), centered on the central axis (A), delineated peripherally by the peripheral edge (33) and centrally by the openings (37); and
- the inner blades (47) protrude inwardly from the peripheral inner face (45).

11. The wheel cap (3) of any one of claims 9 or 10, wherein each inner blade (47) is oriented radially relative to the central axis (A), and extends from the peripheral edge (33) towards the central axis (A) and wherein each inner blade (47) comprises an intrados (48) oriented in a forward rotation direction R of the wheel cap (3), and an extrados (49) oriented opposite, wherein each inner blade (47) is curved so that the intrados (48) is concave and the extrados (49) is convex.

12. The wheel cap (3) of any one of the preceding claims, wherein the outer face (32) has a parabolic shape centered on the central axis (A).

13. A wheel (1), comprising:
- the wheel cap (3) according to any one of the preceding claims; and
- a wheel rim (2), comprising a central outer boss (21), wherein the wheel cap (3) is attached to the wheel rim (2) by means (36) of the inner side (31) of the wheel cap (3) being attached to the central outer boss (21) of the wheel rim (2).

14. The wheel (1) of claim 13, wherein the wheel rim (2) comprises an outer peripheral rim (22) centered on the central axis (A), wherein an annular gap (11) is defined between the peripheral edge (33) and the outer peripheral rim (22).

15. A truck (9), comprising at least one wheel (1) according to any one of claims 13 or 14.

## Amended claims

### Amended claims in accordance with Rule 137(2) EPC.

1. A wheel cap (3), comprising:
- an inner side (31), for attaching the wheel cap (3) to a wheel rim (2) of a wheel (1);
- a peripheral edge (33), coaxial with a central axis (A) of the wheel cap (3);
- an outer face (32), opposite to the inner side (31), wherein the outer face (32) is delineated by the peripheral edge (33) and comprises a peripheral portion (34) and a central portion (35), centered on the central axis (A); and
- openings (37, 38, 39), connecting the peripheral portion (34) to the inner side (31);
wherein the outer face (32) is concave, so that:
- the central portion (35) is recessed inwards relative to the peripheral portion (34) along the central axis (A); and
- the peripheral portion (34) is recessed inwards relative to the peripheral edge (33) along the central axis (A)
**characterized in that** the wheel cap (3) comprises inner vanes (40), extending from the peripheral portion (34) to the inner side (31), wherein each inner vane (40) delineates at least one of the openings (37, 38, 39) and wherein each inner vane (40) has a flared shape centered on the central axis (A), diverging from the outer face (32) towards the inner side (31).

2. The wheel cap (3) of the preceding claim, wherein at least one of the openings (37, 38, 39) comprises an outer central edge (43) delimiting a peripheral side (42) of the opening (37, 38, 39) at the outer face (32) of the wheel cap (3), said outer central edge (43) forming a centrally protruding ridge.

3. The wheel cap (3) of any one of the preceding claims, wherein, at least one of the openings (37, 38, 39) is an arcuate opening, which has an arcuate shape centered on the central axis (A).

4. The wheel cap (3) of claim 3, wherein the arcuate opening (37, 38, 39) comprises:
- a first orthoradial end (61);
- a second orthoradial end (62);
- a peripheral side (42), connecting the first orthoradial end (61) to the second orthoradial end (62), wherein the peripheral side (42) has an arcuate shape centered on the central axis (A); and
- a central side (64), connecting the first orthoradial end (61) to the second orthoradial end (62); wherein the central side (64) has an arcuate shape centered on the central axis (A).

5. The wheel cap (3) of any of the preceding claims, wherein at least one of the openings (37, 38, 39) is a first peripheral opening (37) and at least one of the openings (37, 38, 39) is a second peripheral opening (38), the first peripheral opening (37) being positioned between the peripheral edge (33) and the second peripheral opening (38), so that the first peripheral opening (37) and the second peripheral opening (38) are radially successive relative to the central axis (A), wherein the second peripheral opening (38) is recessed inwards relative to the first peripheral opening (37).

6. The wheel cap (3) of any one of claims 1 or 2, combined with claim 5, wherein the first peripheral opening (37) and the second peripheral opening (38) are separated by one of the inner vanes (40), said inner vane (40) delineating a central side (64) of the first peripheral opening (37) and a peripheral side (42) of the second peripheral opening (38).

7. The wheel cap (3) of any one of the preceding claims, wherein the openings (37, 38, 39) include central openings (39) having a diffuser shape which opens towards the inner side (31) of the wheel cap (3) and diverges from the outer face (32) to the inner side (31).

8. The wheel cap (3) of any one of the preceding claims, wherein the wheel cap (3) further comprises inner blades (47) arranged at the inner side (31) and protruding inwardly.

9. The wheel cap (3) of claim 8, wherein:
- the inner side (31) comprises a peripheral inner face (45), centered on the central axis (A), delineated peripherally by the peripheral edge (33) and centrally by the openings (37); and
- the inner blades (47) protrude inwardly from the peripheral inner face (45).

10. The wheel cap (3) of any one of claims 8 or 9, wherein each inner blade (47) is oriented radially relative to the central axis (A), and extends from the peripheral edge (33) towards the central axis (A) and wherein each inner blade (47) comprises an intrados (48) oriented in a forward rotation direction R of the wheel cap (3), and an extrados (49) oriented opposite, wherein each inner blade (47) is curved so that the intrados (48) is concave and the extrados (49) is convex.

11. The wheel cap (3) of any one of the preceding claims, wherein the outer face (32) has a parabolic shape centered on the central axis (A).

12. A wheel (1), comprising:
- the wheel cap (3) according to any one of the preceding claims; and
- a wheel rim (2), comprising a central outer boss (21), wherein the wheel cap (3) is attached to the wheel rim (2) by means (36) of the inner side (31) of the wheel cap (3) being attached to the central outer boss (21) of the wheel rim (2).

13. The wheel (1) of claim 12, wherein the wheel rim (2) comprises an outer peripheral rim (22) centered on the central axis (A), wherein an annular gap (11) is defined between the peripheral edge (33) and the outer peripheral rim (22).

14. A truck (9), comprising at least one wheel (1) according to any one of claims 12 or 13.
